# EUROPEAN PATENT SPECIFICATION

(11) **EP 3 179 413 B1**
(45) Date of publication and mention of the grant of the patent: **04.08.2021**
(21) Application number: 15829739.0
(22) Date of filing: 10.06.2015
(51) Int. Cl.: G06K 19/077

(54) **RFID DEVICE USED WITHIN RUBBER TYPE, AND INSTALLATION METHOD FOR RFID DEVICE**
RFID-VORRICHTUNG ZUR VERWENDUNG IN EINEM KAUTSCHUKTYP UND INSTALLATIONSVERFAHREN FÜR RFID-VORRICHTUNG
DISPOSITIF RFID UTILISÉ DANS UN TYPE DE CAOUTCHOUC ET SON PROCÉDÉ D'INSTALLATION

(30) Priority: 04.08.2014 CN 201410378859
(43) Date of publication of application: 14.06.2017
(73) Proprietor: MESNAC CO., LTD., Shibei District Qingdao Shandong 266042 (CN)
(72) Inventor: YAO, Yong, Qingdao Shandong 266042 (CN); DONG, Lanfei, Qingdao Shandong 266042 (CN); CHEN, Haijun, Qingdao Shandong 266042 (CN); TONG, Qiang, Qingdao Shandong 266042 (CN); WU, Lichun, Qingdao Shandong 266042 (CN)
(74) Representative: KIPA AB
(86) International application number: PCT/CN2015/081122
(87) International publication number: WO 2016/019758

(56) References cited:
- CN-U- 201 489 571
- CN-U- 202 758 373
- CN-U- 204 204 004
- FR-A1- 2 983 609
- US-A1- 2010 108 211
- US-A1- 2012 305 151
- US-A1- 2013 299 597
- None

## Description

### Field of The Technology

The invention belongs to the technical fields of rubber products and electronic information technology, and relates to improvements in RFID (radio frequency tag) structures, and more specifically the invention is a RFID device used inside rubber tires.

### Background of The Invention

RFID (radio frequency tag) is a non-contact electronic tag capable of realizing automatic identification. Every RFID tag has its own unique identification code. When being implanted inside an information carrier (such as rubber tires) or being attached to the surface of an information carrier, RFID tag could be integrated with the carrier as a whole. Driven by external read-write equipments, the RFID tag could send, read and write data at any time, as well as supervise the state of the carrier during the entire process as in production, sales, utilization and compensation in real time. RFID (radio frequency tag) has been widely used in different fields. A RFID (radio frequency tag) device mainly comprises a chip (integrated circuit), a substrate (a printed circuit board with a certain shape) and an antenna, wherein the chip is soldered on the substrate through its pins and an end of the antenna is also soldered on the substrate. The RFID tag is implanted inside tires during tire formation and integrated with tires by high temperature vulcanization. The RFID tag is being used during the entire life cycle of tires to record certain information, thereby being helpful in solving problems in sales, anti-counterfeiting, anti-fraud, compensation and the like of tire production.

The prior art of RFID (radio frequency tag) used inside rubber tires has several shortcomings:
1. The substrate structure and SMT solder printing process is used, wherein the size of substrate is relatively small. Hence the production is in need of putting multiple pieces together with special clamping tools to grasp the small size substrate, also involves procedures of sorting out and edging after soldering. The production process is complicated and demands much manual work, which leads to uneven quality of RFID tag that makes negative impact on mass production.
2. The substrate is thin with sharp edges. Although the RFID tag is capable of being integrated with rubber in a relatively good state during tire formation, the deformation and the yield of tire exerts friction inside the rubber, which leads to high possibility of being cut by the substrate during the process or damage inside the tire and potential risk of safety.
3. The RFID tag of prior art has different structures in different sides. If the RFID tag is vertically arranged within an interlayer of rubber tire, bubbles may emerge and are difficult to discharge during formation, further leads to the decline of tire quality. Moreover when being automatically implanted in tires during mass production, the RFID electronic tag demands to be distinguished the front side with the back side and its implant state, and therefore the design of automatic implant device become much more difficult.
4. The RFID tag sends and receives data relying on the connection between antenna and RF module. However, the stretch and deformation of tire during production or usage may cause the separation of the antenna and RF module due to break-up, damage or aging, and further causes failure of RFID tag

US2010/0108211 discloses a tire and RFID tag combine as an assembly to include a tire and a tag package mounted to a tire tag mounting surface. The tag package includes a carrier substrate having a die receiving surface and one or more interconnection tabs mounted to the die receiving surface. The tag package further includes a dipole antenna or other antenna configuration formed by first and second antenna members having inward ends connected to respective first and second interconnection tabs on the die receiving surface and outer antenna segments extending outward from the carrier substrate

US2013/0299597 discloses apparatus and methodology for providing an RFID device for integration into a tire. A printed circuit board (PCB) is provided with notches in opposed ends of the PCB that are provided with guide portions as a part of the notches that function as threads to guide an end portion of a matching single pitch helical antenna into appropriately placed vias on the PCB.

US2012/0305151 describes an electronic device intended to be incorporated into a tyre wherein a support and a conductor are joined together by a part for attachment of the support and a part for attachment of the conductor.

### Summary of The Invention

It is the objective of this invention to overcome the shortcomings of the prior art and to provide a RFID device used inside rubber tires, where the substrate is removed by improving the shape and structure of the chip, and therefore the rubber can be avoided being cut by the sharp edge of the substrate and the process could be simplified to ensure the quality of rubber tire product.

The invention is defined by the independent claims.

Preferred embodiments are set out in the dependent claims.

An improved technical solution is that the sleeve is cylindrical and provided with two end openings. Two antenna pins are provided, respectively connected to two ends of the radio frequency chip. The two antenna pins respectively extend out from the two end openings of the cylindrical sleeve.

The connection between the antenna and the antenna pin is realized through the outside surface of the antenna pin. More specifically, there are two antennas extending as the structure of spiral. One end of each of the two spring antennas respectively surrounds the outside surface of one antenna pin. The inner diameter of the spring antenna is slightly smaller than the outer diameter of the antenna pin. A further improvement of the above-mentioned technical solution is that the inner diameter of the spring antenna is slightly larger than the outer diameter of the antenna pin. The spring antenna is solidly connected to the antenna pin through solder, stamping or electroplating. The connection between the antenna and the antenna pin also can be realized through the inside surface of the antenna pin. More specifically, the sleeve is a cylinder with two end openings. There are two antenna pins and each of the antenna pin is respectively connected with one end of the radio frequency chip. There are two antennas extending as the structure of spiral. The antenna pin is a hollow cylinder extending out from the sleeve or being installed inside the sleeve. One end of each of the spring antenna respectively inserts into the hollow cylinder of the antenna pin and the outer diameter of the spring antenna is slightly larger than the inner diameter of the antenna pin. A further improvement of the above-mentioned technical solution is that the sleeve is a cylinder with two end openings. There are two antenna pins and each of the antenna pin is respectively connected to one end of the radio frequency chip. There are two antennas extending as the structure of spiral. The antenna pin is a hollow cylinder extending out from the sleeve or being installed inside the sleeve. One end of each of the spring antenna respectively inserts into the hollow cylinder of the antenna pin and the outer diameter of the spring antenna is slightly smaller than the inner diameter of the antenna pin. The spring antenna is solidly connected to the antenna pin by solder, stamping or electroplating.

In order to enlarge the contact area between the antenna and the antenna pin and also improve the solidity of the connection, the spiral pitch of the part of the spring antenna connected with the antenna pin is smaller than those of other parts of the spring antenna.

The antenna is being installed surrounding the outside surface of the antenna pin in the sleeve connection. More specifically, the antenna pins extends out from the sleeve and the antennas are in a shape extending as spiral, the antenna is being provided with surrounding the outside surface of the antenna pin and interference fits are utilized between the antenna and the antenna pin.

An improved technical solution is that the antenna pins extend out from the sleeve, and the antenna extends as the structure of spiral, the antenna is being provided by surrounding the outside surface of the antenna pin and then solidly connected with the antenna pin by solder, stamping or electroplating.

Further the sleeve connection between the antenna and antenna pin can be realized by inserting the antenna into the antenna pin. More specifically, the antenna pin is a hollow cylinder and the antenna extends as the structure of spiral, the antenna is being inserted into the antenna pin and interference fits are utilized between the antenna and the antenna pin.

An improved technical solution is that the antenna pin is a hollow cylinder and the antenna extends as the structure of spiral, the antenna is being inserted into the antenna pin and then solidly connected with the antenna pin by solder, stamping or electroplating.

In order to enlarge the contact area between the antenna and the antenna pin and also improve the solidity of the connection, the spiral pitch of the part of the spring antenna connected with the antenna pin is reduced.

Compared with the prior art, the present invention has following advantages that:
There is no substrate used in the RFID device (Radio Frequency tag) disclosed in the present invention and also in the installation method, hence the damage of rubber caused by being cut by the sharp edges of the substrate and the quality problems caused by the complicated solder process for the substrate and the chip can be avoided, and hence the product quality and the efficiency could be highly improved.

### Brief Description of The Drawings

Figure 1 is a front view of an embodiment of the RFID device used inside rubber tires;
Figure 2 is a side view of the Figure 1;
Figure 3 is a front view of another embodiment of the RFID device used inside rubber tires;
Figure 4 is a side view of the Figure 3.

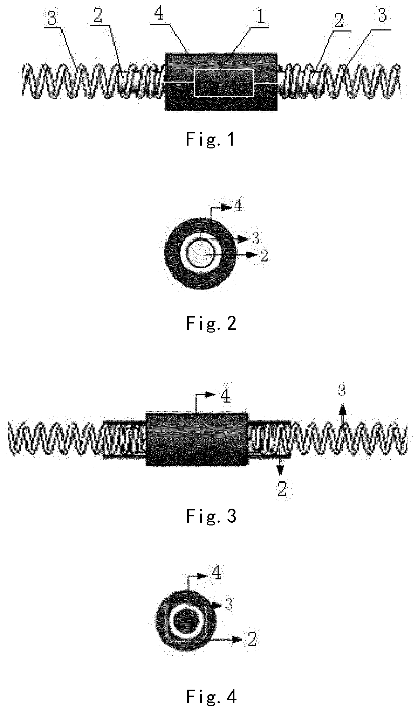

As shown from the Figure 1 to Figure 4, the reference numbers are: the radio frequency chip 1, the antenna pin 2, the antenna 3 and the sleeve 4.

### Detailed Embodiment of the Invention:

The present invention will now be described in detail with reference to the attached drawings:
Shown in the Figure 1 is an embodiment of the RFID device used inside rubber tires, the RFID device comprises: radio frequency chip 1, antenna pins 2 on the radio frequency chip 1, and antennas 3 connected to the antenna pins 2. The radio frequency chip 1 is packaged in a sleeve 4 with smooth surface and the antenna pins 2 extend out from the sleeve 4 and the antennas 3 are fixed on the antenna pins 2.

In the embodiment as shown in the Figure 1 and in the Figure 2, the sleeve 4 is cylindrical and provided with two end openings. Two antenna pins 2 are provided and respectively connected to two ends of the radio frequency chip 1. The two antenna pins 2 respectively extend out from the two end openings of the cylindrical sleeve 1. There are two antennas 3 extending as the structure of spiral. The inner diameter of the spring antenna 3 is slightly larger than the outer diameter of the antenna pin 2. One end of each of the two spring antennas 3 respectively surrounds the outside surface of one antenna pin 2, and solidly fixed on the antenna pin 2 by solder, stamping or electroplating. Interference fits also can be used to solidly connect the spring antenna 3 and the antennas pins 2, namely, the inner diameter of the spring antenna 3 is slightly smaller than the outer diameter of the antenna pin 2.

During the process for producing tags, the spring antenna 3 is being installed surrounding the antenna pin 2 and the antenna pin 2 is in the center of the spring antenna 3 , and then solder, stamping or electroplating is used to solidly connect the spring antenna 3 and the antenna pin 2. In order to ensure a reliable contact between the antenna 3 and the antenna pin 2, the spiral pitch between the parts of the spring antennas 3 connected to the antenna pins 2 are appropriately reduced to enlarge the contact area and enhance the solidity of solder.

The shape of the integrated radio frequency chip 1 is not limited to cylinder as shown in the Fig. 1 and in the Fig. 2, the shapes such as sphere, or other shapes with blunt angles such as cube also can be used in design. The damage of rubber caused by cutting could be avoided. However, there shall be an even number of antenna pins 2 and the design of the shape of the antenna pin requires being convenient to connect to the antenna in a solid way.

Shown in the Fig. 3 and Fig. 4 is another embodiment of the RFID device used inside rubber tires, the basic structure of the embodiment is same with that of the embodiment described above. What distinguished this embodiment with the one above are, in this embodiment, the antenna pin 2 is a hollow cylinder, and the spring antenna 3 is inserted into the antenna pin 2 and the spring antenna 3 is in the center of the antenna pin 2, and the spring antenna 3 is solidly connected to the antenna pin 2 by solder, stamping or electroplating. Interference fits also can be used to solidly connect the spring antenna 3 and the antennas pins 2, namely the outer diameter of the spring antenna 3 is slightly larger than the inner diameter of the antenna pin 2.

As an improvement (not shown in the drawings) of the structure shown in the Fig. 3 and in the Fig. 4, the antenna pin 2 can be arranged inside the sleeve 4 instead of extending out from the sleeve 4.

## Claims

1. An RFID device, the RFID device comprises:
a radio frequency chip (1) which is packaged in a sleeve (4);
two antenna pins (2) respectively connected to the radio frequency chip (1);
two antennas (3), each extending as a structure of a spiral, and wherein the two antennas (3) are connected to the two antenna pins (2) by being fixed to the antenna pins (2); and
wherein the sleeve (4) is cylindrical and provided with two end openings;
the two antenna pins (2) respectively extend out from the two end openings of the cylindrical sleeve (4);
**characterized in that**:
a spiral pitch of a part of the two antennas (3) fixed to the two antenna pins (2) is smaller than a spiral pitch of other parts of the two antennas (3).

2. The RFID device according to the claim 1, **characterized in that** an inner diameter of the two antennas (3) is smaller than an outer diameter of the two antenna pins (2).

3. The RFID device according to the claim 1, **characterized in that** an inner diameter of the two antennas (3) is larger than an outer diameter of the two antenna pins (2), the two antennas (3) are fixed to the two antenna pins (2) by solder, stamping or electroplating.

4. The RFID device according to the claim 1, **characterized in that** an outer diameter of the two antennas (3) is larger than an inner diameter of the two antenna pins (2).

5. The RFID device according to the claim 1, **characterized in that** an outer diameter of the two antennas (3) is smaller than an inner diameter of the two antenna pins (2), the two antennas (3) are fixed to the antenna pin (2) by solder, stamping or electroplating.

6. An installation method for a RFID device, the method comprising:
providing a radio frequency chip (1), and two antennas (3), and wherein the radio frequency chip (1) comprises two antenna pins (2) connected to the radio frequency chip (1),
wherein the radio frequency chip (1) and the two antenna pins (2) are packaged in a sleeve (4),
the two antenna pins (2) extend out from the sleeve (4);
connecting the two antennas (3) to the two antenna pins (2) by fixing a part of the antennas (3) to the two antenna pins (2), and each of the two antennas (3) are extending as a structure of a spiral; and
**characterized in that** a spiral pitch of said part of the two antennas (3) fixed to the two antenna pins (2) is smaller than a spiral pitch of other parts of the two antennas (3).

7. The installation method according to claim 6, **characterized by**: installing the two antennas (3) surrounding an outer surface of the two antenna pins (2), whereby an interference fit is utilized between the two antennas (3) and the two antenna pins (2).

8. The installation method for RFID device according to claim 6, **characterized by**: solidly connecting the two antennas (3) to the two antenna pins (2) by solder, stamping or electroplating.

9. The installation method for RFID device according to claim 6, **characterized by**: inserting the two antennas (3) into the two antenna pins (2), whereby an interference fit is utilized between the two antennas (3) and the two antenna pins (2).

10. The installation method for RFID device according to claim 6, **characterized by**: inserting a part of the two antennas (3) into the two antenna pins (2), and solidly connecting the two antennas (3) to the two antenna pins (2) by solder, stamping or electroplating.

## Patentansprüche

1. Eine RFID-Vorrichtung, wobei die RFID-Vorrichtung Folgendes umfasst:
einen Funkchip (1), der in eine Hülle (4) eingelassen ist,
zwei Antennenkontakte (2), die jeweils an den Funkchip (1) angeschlossen sind,
zwei Antennen (3), die jede spiralförmig ausgebildet sind und wobei die beiden Antennen (3) durch Befestigung an den Antennenkontakten (2) an die Antennenkontakte (2) angeschlossen sind, und
wobei die Hülle (4) zylindrisch ausgebildet ist und zwei offene Enden aufweist und die beiden Antennenkontakte (2) jede aus den Endöffnungen der zylindrischen Hülle (4) hervorstehen,
**dadurch gekennzeichnet, dass**:
eine Spirale eines Teils der beiden an den beiden Antennenkontakten (2) befestigten Antennen (3), kleiner als die Spirale der anderen Teile der beiden Antennen (3) ist.

2. Die RFID-Vorrichtung gemäß Anspruch 1, **dadurch gekennzeichnet, dass** ein Innendurchmesser der beiden Antennen (3) kleiner als der Außendurchmesser der beiden Antennenkontakte (2) ist.

3. Die RFID-Vorrichtung gemäß Anspruch 1, **dadurch gekennzeichnet, dass** ein Innendurchmesser der beiden Antennen (3) größer als der Außendurchmesser der beiden Antennenkontakte (2) ist und die beiden Antennen (3) durch Schweißung, Stanzung oder Galvanisierung an den beiden Antennenkontakten (2) befestigt sind.

4. Die RFID-Vorrichtung gemäß Anspruch 1, **dadurch gekennzeichnet, dass** ein Außendurchmesser der beiden Antennen (3) größer als der Innendurchmesser der beiden Antennenkontakte (2) ist.

5. Die RFID-Vorrichtung gemäß Anspruch 1, **dadurch gekennzeichnet, dass** ein Außendurchmesser der beiden Antennen (3) kleiner als der Innendurchmesser der beiden Antennenkontakte (2) ist und die beiden Antennen (3) durch Schweißung, Stanzung oder Galvanisierung an den beiden Antennenkontakten (2) befestigt sind.

6. Ein Einbauverfahren für eine RFID-Vorrichtung, wobei das Verfahren Folgendes beinhaltet:
die Bereitstellung eines Funkchips (1) und von zwei Antennen (3), wobei der Funkchip (1) zwei Antennenkontakte (2) aufweist, die mit dem Funkchip (1) verbunden sind, wobei der Funkchip (1) und die beiden Antennenkontakte (2) in einer Hülle (4) untergebracht sind,
die beiden Antennenkontakte (2) aus der Hülle (4) hervorstehen,
den Anschluss der beiden Antennen (3) an die Antennenkontakte (2) durch Befestigen eines Teils der Antennen (3) an die beiden Antennenkontakte (2), wobei jede der beiden Antennen (3) spiralförmig ausgebildet ist,
**dadurch gekennzeichnet, dass** eine Spirale eines Teils der beiden an den beiden Antennenkontakten (2) befestigten Antennen (3). kleiner als die Spirale der anderen Teile der beiden Antennen (3) ist.

7. Das Einbauverfahren gemäß Anspruch 6, **dadurch gekennzeichnet, dass** die beiden Antennen (3) so angebracht werden, dass sie eine Außenfläche der beiden Antennenkontakte (2) umschließen, wobei eine Presspassung zwischen den beiden Antennen (3) und den beiden Antennenkontakten (2) verwendet wird.

8. Das Einbauverfahren für eine RFID-Vorrichtung gemäß Anspruch 6, **dadurch gekennzeichnet, dass** der Anschluss der beiden Antennen (3) an die beiden Antennenkontakte (2) durch Schweißung, Stanzung oder Galvanisierung erfolgt.

9. Das Einbauverfahren für eine RFID-Vorrichtung gemäß Anspruch 6, **dadurch gekennzeichnet, dass** die beiden Antennen (3) in die beiden Antennenkontakte (2) eingeführt werden, wobei eine Presspassung zwischen den beiden Antennen (3) und den beiden Antennenkontakten (2) verwendet wird.

10. Das Einbauverfahren für eine RFID-Vorrichtung gemäß Anspruch 6, **dadurch gekennzeichnet, dass** ein Teil der beiden Antennen (3) in die beiden Antennenkontakte (2) eingeführt wird und die beiden Antennen (3) durch Schweißung, Stanzung oder Galvanisierung fest mit den beiden Antennenkontakten (2) verbunden werden.

## Revendications

1. Dispositif RFID, le dispositif RFID comprend :
une puce radiofréquence (1) qui est conditionnée dans un manchon (4) ;
deux broches d'antenne (2) respectivement connectées à la puce radiofréquence (1) ;
deux antennes (3), chacune s'étendant sous la forme d'une structure de spirale, et où les deux antennes (3) sont connectées aux deux broches d'antenne (2) en étant fixées aux deux broches d'antenne (2) ; et
où le manchon (4) est cylindrique et est doté de deux ouvertures d'extrémité ; les deux broches d'antenne (2) s'étendent respectivement à l'extérieur par les deux ouvertures d'extrémité du manchon cylindrique (4) ;
**caractérisé en ce que** :
un pas de spirale d'une partie des deux antennes (3) fixées aux deux broches d'antenne (2) est inférieur à un pas de spirale des autres parties des deux antennes (3).

2. Dispositif RFID selon la revendication 1, **caractérisé en ce qu'**un diamètre intérieur des deux antennes (3) est inférieur à un diamètre extérieur des deux broches d'antenne (2).

3. Dispositif RFID selon la revendication 1, **caractérisé en ce qu'**un diamètre intérieur des deux antennes (3) est supérieur à un diamètre extérieur des deux broches d'antenne (2), les deux antennes (3) sont fixées aux deux broches d'antenne (2), par soudure, estampage ou électrodéposition.

4. Dispositif RFID selon la revendication 1, **caractérisé en ce qu'**un diamètre extérieur des deux antennes (3) est supérieur à un diamètre intérieur des deux broches d'antenne (2).

5. Dispositif RFID selon la revendication 1, **caractérisé en ce qu'**un diamètre extérieur des deux antennes (3) est inférieur à un diamètre intérieur des deux broches d'antenne (2), les deux antennes (3) sont fixées à la broche d'antenne (2), par soudure, estampage ou électrodéposition.

6. Procédé d'installation d'un dispositif RFID, le procédé comprenant les étapes consistant à :
fournir une puce radiofréquence (1), et deux antennes (3), et où la puce radiofréquence (1) comprend deux broches d'antenne (2) connectées à la puce radiofréquence (1), où la puce radiofréquence (1) et les deux broches d'antenne (2) sont conditionnées dans un manchon (4), les deux broches d'antenne (2) s'étendent à l'extérieur du manchon (4) ;
connecter les deux antennes (3) aux deux broches d'antenne (2) en fixant une partie des antennes (3) aux deux broches d'antenne (2), et chacune des deux antennes (3) s'étend sous la forme d'une structure de spirale ; et
**caractérisé en ce que**
un pas de spirale de ladite partie des deux antennes (3) fixées aux deux broches d'antenne (2) est inférieur à un pas de spirale des autres parties des deux antennes (3).

7. Procédé d'installation selon la revendication 6, **caractérisé par** : le fait d'installer les deux antennes (3) autour d'une surface extérieure des deux broches d'antenne (2), grâce à quoi un ajustement d'emboîtement est utilisé entre les deux antennes (3) et les deux broches d'antenne (2).

8. Procédé d'installation d'un dispositif RFID selon la revendication 6, **caractérisé par** : le fait de connecter solidement les deux antennes (3) aux deux broches d'antenne (2) par soudure, estampage ou électrodéposition.

9. Procédé d'installation d'un dispositif RFID selon la revendication 6, **caractérisé par** : le fait d'insérer les deux antennes (3) dans les deux broches d'antenne (2), grâce à quoi un ajustement d'emboîtement est utilisé entre les deux antennes (3) et les deux broches d'antenne (2).

10. Procédé d'installation d'un dispositif RFID selon la revendication 6, **caractérisé par** :
le fait d'insérer une partie des deux antennes (3) dans les deux broches d'antenne (2), et de connecter solidement les deux antennes (3) aux deux broches d'antenne (2) par soudure, estampage ou électrodéposition.
